# EUROPÄISCHE PATENTSCHRIFT

(11) **EP 0 448 952 B1**
(45) Veröffentlichungstag und Bekanntmachung des Hinweises auf die Patenterteilung: **21.09.1994**
(21) Anmeldenummer: 91102242.4
(22) Anmeldetag: 18.02.1991
(51) Int. Cl.: F16B 13/14

(54) **Verbundanker**
Compound anchoring element
Dispositif d'ancrage composite

(30) Priorität: 29.03.1990 DE 4010051
(43) Veröffentlichungstag der Anmeldung: 02.10.1991
(73) Patentinhaber: UPAT GMBH & CO, D-79312 Emmendingen (DE)
(72) Erfinder: Daryoush, Anisi, W-7831 Wyhl (DE); Rinklake, Manfred, W-7830 Emmendingen 14 (DE); Frischmann, Albert, W-7832 Kenzingen (DE)
(74) Vertreter: Rackette, Karl, Dipl.-Phys. Dr.-Ing

(56) Entgegenhaltungen:
- EP-A- 0 172 134
- EP-A- 0 338 982
- WO-A-88/07142

## Beschreibung

Die Erfindung betrifft einen Verbundanker mit einem in ein mit aushärtbarer Mörtelmasse füllbares Bohrloch unter Drehung einsetzbaren Verankerungsteil, auf dessen Mantelfläche eine beim Einschieben des Verbundankers in das Bohrloch entlang der Bohrlochwandung streifende Abdeckung angeordnet ist, die eine Vielzahl von radialen Öffnungen aufweist.

Ein derartiger in der DE-OS 26 25 492 beschriebener Verbundanker verfügt über eine Abdeckung in Gestalt einer gazeartigen Hülse, die als Träger für einen Härter zum Aushärten der Mörtelmasse dient. Die gazeartige Hülse besteht dabei aus Stahl, Kunststoff oder Glasfaser. Beim Setzen des Verbundankers kommt an der Wandung des Bohrloches verteilter Kunstharz mit dem Härter der Hülse in Berührung, wobei aufgrund der Drehbewegung des Verankerungsteils eine Vermischung des Härters und Kunstharzes stattfindet. Dadurch wird eine Aushärtung eingeleitet, so daß nach der Erhärtung des Kunstharzes eine Haftung durchgehender Art erreicht ist.

Ein aus der DE 32 38 751 A1 bekannter Verbundanker verfügt am vorderen Ende seines Verankerungsteils über eine drehfest verbundene, kegelförmige mit ihrer Öffnung zum hinteren Ende des Verbundankers weisende Scheibe, deren Rand beim Einschieben des Verbundankers in das mit der Mörtelmasse ausgefüllte Bohrloch an der Bohrlochwandung durch Form- und/oder Materialelastizität der Scheibe entlangstreift und dabei in der Mörtelmasse enthaltene Mikrokapseln durch Verpressen an der Bohrlochwand zerstört.

Ausgehend von diesem Stand der Technik liegt der Erfindung die Aufgabe zugrunde, einen Verbundanker der eingangs genannten Art zu schaffen, der sich durch eine gute Verbindung der ausgehärteten Mörtelmasse mit der Bohrlochwand sowie durch besonders hohe Auszugswerte auszeichnet.

Diese Aufgabe wird erfindungsgemäß dadurch gelöst, daß die Abdeckung mit dem Verankerungsteil drehfest verbunden ist und sich zumindest über einen Umfangsabschnitt in axialer Richtung entlang dem Verankerungsteil erstreckt.

Die Abdeckung des Verankerungsteils des Verbundankers kann dabei im einfachsten Fall aus einem Maschendrahtstreifen bestehen, der den Mantel einseitig oder vorzugsweise auf sich gegenüberliegenden Seiten rinnenförmig umgibt. Durch Verbreitern des Maschendrahtstreifens in Umfangsrichtung ergibt sich eine hülsenartige Abdeckung über einen Winkel von bis zu 360 Grad. Die Abdeckung mit einer Vielzahl von Öffnungen kann statt durch Maschendraht auch durch andere mit Durchbrüchen versehene Metallteile, insbesondere gelochte Blechstreifen oder gelochte Blechhülsen realisiert werden. Dadurch, daß sich die Abdeckung in axialer Richtung über eine verhältnismäßig große Länge erstreckt, wird gleichzeitig an vielen Stellen beim Eindrehen des Verbundankers eine Bohrlochreinigung bewirkt. Das von der Bohrlochwandung zu entfernende Material kann dabei durch die Öffnungen der Abdeckung in den Ringraum zwischen der mit Konen oder einem Gewinde versehenen Oberfläche des Verbundankers und der Innenseite der Hülse abgeführt werden.

Das von der gelochten Abdeckung des Verbundankers umgebene Befestigungselement kann als Gewindestange oder als Ankerstange mit einem oder mehreren Konen im Befestigungsabschnitt ausgebildet sein.

Bei einem zweckmäßigen Ausführungsbeispiel ist die Abdeckung als Siebhülse ausgebildet und mit den Gewindespitzen einer Gewindestange durch Schweißpunkte verbunden. Alternativ oder zusätzlich kann die Siebhülse einen Mitnehmersteg aufweisen, der in einer auf dem Verbundanker ausgebildeten sich axial erstreckenden radialen Nut eingreift.

Die insbesondere als Reinigungselement dienende Abdeckung in Gestalt eines rinnenförmigen Streifens oder einer Hülse kann insbesondere als Maschendrahthülse mit einer Vielzahl von axialen Drähten und einer Vielzahl von in Umfangsrichtung umlaufenden Drähten ausgebildet sein. Bei einer bevorzugten Ausführungsform der Erfindung wird eine Maschendrahthülse verwendet, die an ihrem vorderen Ende und an ihrem hinteren Ende jeweils an zwei diametral gegenüberliegenden Stellen mit einem mehrere Konen aufweisenden Verankerungsteil verschweißt ist. Beim Verschweißen werden jeweils fünf in Umfangsrichtung umlaufende Drähte, aber jeweils nur zwei in axialer Richtung verlaufende Drähte, innerhalb der Schweißfläche erfaßt. Auf diese Weise ergibt sich zwischen der Maschendrahthülse und der Mantelfläche des Verankerungsteils eine in Umfangsrichtung höhere Belastbarkeit als in axialer Richtung. Dadurch wird nach dem Aushärten der Mörtelschale erreicht, daß bei einem Riß durch die Mörtelschale durch einen axialen Zug auf den Verbundanker ein Nachspreizen der Mörtelschale möglich ist, wobei die nur zwei axiale Drähte erfassende Verschweißung als Sollbruchstelle bricht. Um die Wirksamkeit der Sollbruchstelle zu erhöhen, kann zusätzlich zum Verschweißen der Maschendrahthülse ein Formschluß vorgesehen sein, der in Umfangsrichtung wirksam ist. Dazu eignet sich ganz besonders eine Ausbildung des vorderen Endes des Verankerungsteils als Dachschneide, die neben der Möglichkeit der Aufnahme von Torsionskräften den Vorteil bietet, daß eine gute Durchmischung des Mörtels im Bohrloch gefördert wird.

Statt des Einsatzes von Maschendrahthülsen mit axialen und in Umfangsrichtung umlaufenden Drähten können auch Maschendrahthülsen verwendet werden, deren zueinander rechtwinklig verlaufende Drähte schräg zur Längsachse der Maschendrahthülse verlaufen.

Eine andere Möglichkeit besteht darin, die Abdeckung aus einem Rippenstreckmetallblech herzustellen.

Die Abdeckung kann auch eine Oberfläche in Gestalt eines Reibbleches aufweisen und mit einer Vielzahl von radial vorstehenden Blechspitzen versehen sein, die um Öffnungen eines Lochbleches herum angeordnet sind. Es ist auch möglich, die Abdeckung aus einem Lochblech mit einer Vielzahl von Löchern und einer glatten Oberfläche herzustellen.

Nachfolgend werden Ausführungsbeispiele der Erfindung anhand der Zeichnung beschrieben. Es zeigen:
- Fig. 1: das vordere Ende einer Gewindestange in einer Seitenansicht,
- Fig. 2: eine aus Maschendraht hergestellte Siebhülse in einer Seitenansicht,
- Fig. 3: das vordere Ende der Gewindestange mit der an ihr drehfest befestigten Maschendrahthülse nach dem Einsetzen in ein mit Mörtelmasse gefülltes Bohrloch in einer Seitenansicht, teilweise im Schnitt,
- Fig. 4: einen radialen Schnitt durch die Gewindestange im Bereich von Schweißpunkten zur Verbindung des Maschendrahtes mit den Gewindespitzen im Ausschnitt,
- Fig. 5: eine Ankerstange mit einem mehrere Konen aufweisenden Konusabschnitt in einer Seitenansicht,
- Fig. 6: eine Siebhülse aus Maschendraht zum axialen Aufschieben auf die Ankerstange gemäß Fig. 5,
- Fig. 7: die mit der Siebhülse gemäß Fig. 6 drehfest verbundene Ankerstange in einem mit Mörtelmasse gefüllten Bohrloch in einer Seitenansicht,
- Fig. 8: einen Schnitt entlang der Linie VIII-VIII in Fig. 7,
- Fig. 9: eine Siebhülse aus Rippenstreckmetall in einer Seitenansicht,
- Fig. 10: einen Ausschnitt der Oberfläche der Siebhülse gemäß Fig. 9 in einer vergrößerten Darstellung,
- Fig. 11: einen radialen Schnitt durch die Siebhülse gemäß Fig. 9,
- Fig. 12: einen axialen Schnitt zu Veranschaulichung der Schweißpunkte zwischen der Siebhülse gemäß Fig. 9 und den Spitzen einer Gewindestange,
- Fig. 13: eine Siebhülse mit einer reibblechartigen Oberfläche,
- Fig. 14: einen radialen Schnitt durch die Siebhülse gemäß Fig. 13,
- Fig. 15: einen Ausschnitt eines Axialschnittes durch die Siebhülse gemäß Fig. 13 zur Veranschaulichung der Schweißpunkte und der Oberflächengestalt der Siebhülse gemäß Fig. 13,
- Fig. 16: eine Siebhülse aus einem Lochblech,
- Fig. 17: eine Stirnansicht auf die Siebhülse gemäß Fig. 16,
- Fig. 18: einen Ausschnitt eines Axialschnittes durch die Siebhülse gemäß Fig. 16 zur Veranschaulichung der Schweißverbindung zwischen den Gewindespitzen einer Gewindestange und der Innenseite der Siebhülse gemäß Fig. 16,
- Fig. 19: eine Gewindestange mit einer streifenförmigen Maschendrahtabdeckung, die sich entlang dem Mantel der Gewindestange in axialer Richtung rinnenartig bis zu deren vorderen Ende auf zwei radial gegenüberliegenden Mantelseiten erstreckt,
- Fig. 20: einen Schnitt entlang der Linie XX-XX in Fig. 19 zur Veranschaulichung der symmetrischen Abdeckung durch die Maschendrahtstreifen einer Gewindestange,
- Fig. 21: das vordere Ende einer Gewindestange mit zwei gegenüberliegenden sich axial erstreckenden Nuten und jeweils einem Maschendrahtstreifen, der entlang seinem in Drehrichtung weisenden Rand abgeknickt und in die Nut eingeklemmt oder eingesteckt ist,
- Fig. 22: einen Querschnitt durch den Verankerungsteil des Verbundankers gemäß Fig. 21,
- Fig. 23: eine Seitenansicht eines bevorzugten Ausführungsbeispiels für einen Verbundanker mit einer im Querschnitt dargestellten Maschendrahthülse,
- Fig. 24: eine Draufsicht auf eine Verschweißungsstelle der Maschendrahthülse für einen Verbundanker gemäß Fig. 23,
- Fig. 25: ein weiteres Ausführungsbeispiel für einen Verbundanker mit einer formschlüssig drehfest befestigten Maschendrahthülse,
- Fig. 26: eine Maschendrahthülse mit einem Blechstreifen zur Verstärkung in einer Seitenansicht und
- Fig. 27: eine vergrößerte Darstellung des Verlaufs der Drähte einer Maschendrahthülse mit schräg verlaufenden Maschendrähten.

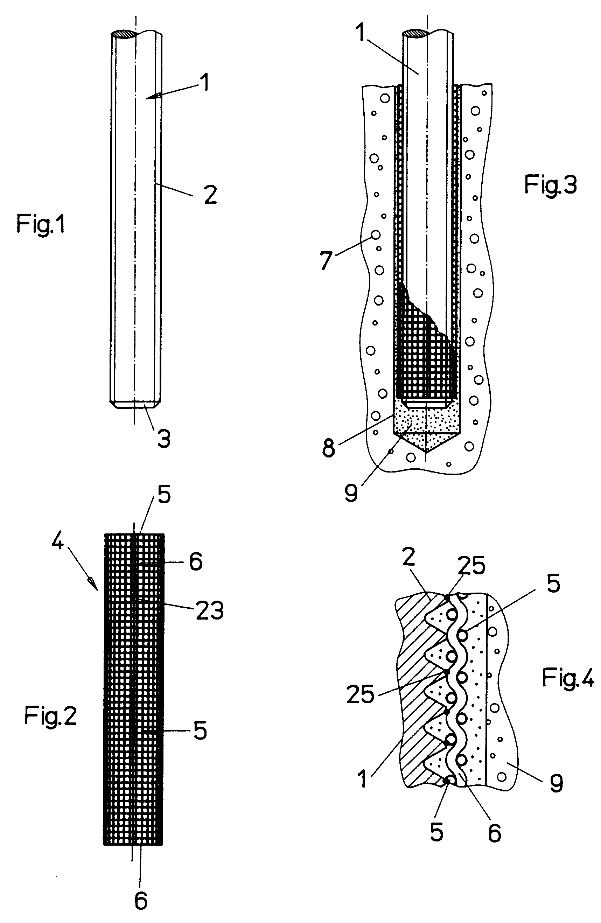

In Fig. 1 erkennt man einen als Gewindestange 1 ausgebildeten Verbundanker, der zum Befestigen eines in der Zeichnung nicht dargestellten Gegenstandes dient. Das Gewinde 2 der Gewindestange 1 erstreckt sich von dem in der Zeichnung nicht dargestellten hinteren Ende bis zum vorderen Ende 3 der Gewindestange 1 in der in Fig. 1 dargestellten Weise.

Der Gewindestange 1 ist als Abdeckung eine Siebhülse 4 zugeordnet, die bei dem in Fig. 2 dargestellten Ausführungsbeispiel als Maschendrahthülse ausgebildet ist. Eine derartige Siebhülse 4 besteht aus runden, zueinander kreuzförmig angeordneten axialen Drähten 5 und in Umfangsrichtung umlaufenden Drähten 6. Die Drähte 5, 6 haben vorzugsweise eine wellige Form und lassen zwischen den Drähten 5, 6 in etwa rechteckige Öffnungen 23 entstehen. Vor dem Befestigen der Gewindestange 1 in einem Befestigungsgrund 7, der in Fig. 3 dargestellt ist, wird in den Befestigungsgrund 7 ein zylindrisches Bohrloch 8 gebohrt und mit einer Mörtelmasse 9 teilweise gefüllt.

Bevor die Gewindestange 1 in das mit Mörtelmasse 9 teilweise gefüllte Bohrloch 8 drehend eingetrieben wird, wurde die Siebhülse 4 auf dem Mantel der Gewindestange 1 gegenüber dem Gewinde 2 unverrückbar und unverdrehbar durch Verschweißen der Drähte 5, 6 an Schweißstellen 25 mit dem Gewinde 2 in der in Fig. 4 schematisch dargestellten Weise verbunden. Beim Eindrehen der von der Siebhülse 4 überzogenen Gewindestange 1 in das mit Mörtelmasse 9 gefüllte Bohrloch 8 dient die durch die Siebhülse 4 mit den Öffnungen 23 gebildete Abdeckung beim drehenden Setzvorgang als Reinigungshülse und bewirkt eine sehr wirksame Bohrlochreinigung. Die Maschen der aus den Drähten 5, 6 bestehenden Siebhülse 4 schleifen beim drehenden Setzvorgang entlang der Bohrlochwandung des Bohrloches 8 und bewirken eine gezielte Reinigung auf der gesamten Länge des Bohrloches 8. Zusätzlich bewirkt die Siebhülse 4 ein sehr intensives Vermischen der Mörtelmasse 9, da die Siebhülse 4 mit ihrem Maschendrahtmantel wie ein Mischquirl wirkt.

Nach dem Abbinden der Mörtelmasse 9 im Bohrloch 8 ergibt sich eine sehr gute Befestigung der Gewindestange 1 im Befestigungsgrund 7, da die Drähte 5, 6 der Siebhülse 4 eine Verstärkung der ausgehärteten Mörtelmasse 9 in der Art einer Bewehrung bewirken. Bei Auszugsversuchen konnte gezeigt werden, daß ein Kegelausbruch bei Verwenden der Siebhülse 4 tiefer in den Befestigungsgrund 7 hineinreicht, wobei die Spitze des Kegelausbruchs erst am Ende der Gewindestange 1 und nicht etwa bereits in der Mitte der Einbindetiefe auftritt. Die Siebhülse 4 bewirkt somit nicht nur eine Bohrlochreinigung und ein Durchmischen der Mörtelmasse 9, sondern auch eine Vergrößerung der Belastbarkeit der in den Befestigungsgrund 7 eingesetzten Gewindestange 1.

Das Verhältnis des Durchmessers der Gewindestange 1 zum Durchmesser des Bohrloches 8 entspricht den üblichen bei Mörtelsystemen für Verbundanker verwendeten Verhältnissen, jedoch reduziert sich durch das Einsetzen der Siebhülse 4 in den Ringspalt zwischen dem Mantel der Gewindestange 1 einerseits und der Innenseite des Bohrloches 8 andererseits das Ringspaltvolumen. Das Gewinde 2 der Gewindestange 1 bildet die Innenseite einer Vielzahl von Ringräumen, die nach außen durch die Siebhülse 4 begrenzt sind, wie man in Fig. 4 erkennen kann.

Statt der in Fig. 4 schematisch dargestellten drehfesten Verbindung zwischen der Siebhülse 4 und der Gewindestange 1 durch Verschweißen können auch andere Methoden zur Verbindung dieser Teile verwendet werden. Insbesondere kann die zur Abdeckung des Verankerungsteils der Gewindestange 1 verwendete Siebhülse 4 mit einem entlang der Innenseite ihres Mantels nach innen hervorspringenden und axial verlaufenden Steg versehen sein, der in einer entlang dem Mantel der Gewindestange 1 verlaufenden Axialnut ruht und somit in axialer Richtung auf die Gewindestange 1 aufschiebbar ist.

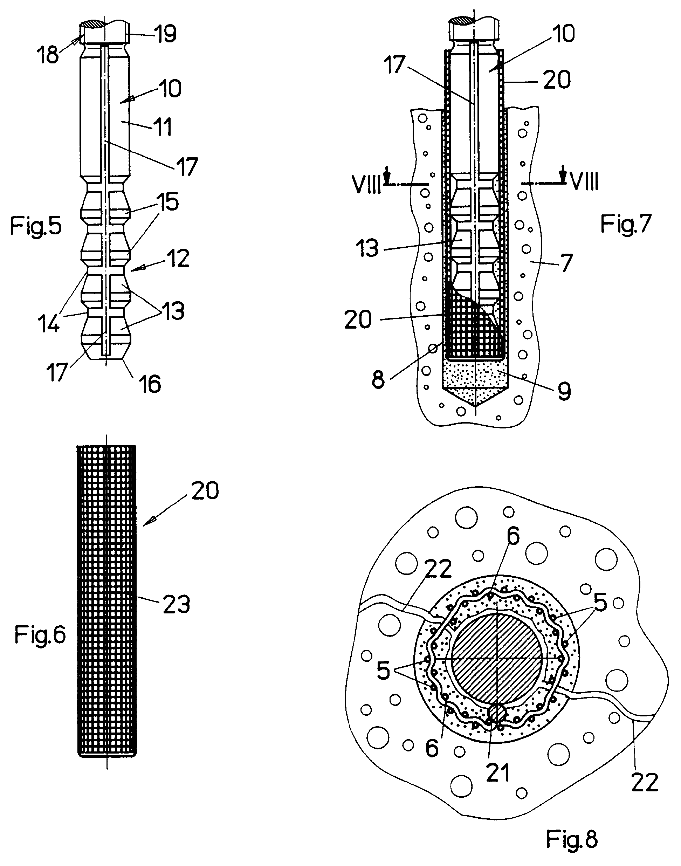

Fig. 5 veranschaulicht einen Verbundanker in Gestalt einer Ankerstange 10 mit einem glatten Befestigungsabschnitt 11 und einem Konusabschnitt 12 aus mehreren Spreizkonen 13. Zwischen den Spreizkonen 13 befinden sich Ringräume zwischen jeweils einer inneren Überzugszone 14 im Bereich der kleinsten Durchmesser und einer äußeren Überzugszone 15 im Bereich der größten Durchmesser. Außerdem erkennt man in Fig. 5 eine sich axial vom vorderen Ende 16 entlang dem Mantel des Konusabschnitts 12 und des glatten Befestigungsabschnittes erstreckende Nut 17. Die Nut 17 reicht in axialer Richtung bis zu einem Gewindeabschnitt 18 mit einem Gewinde 19 und in radialer Richtung bis zu den inneren Überzugszonen 14.

Vor dem Einsetzen der Ankerstange 10 in das in Fig. 7 im Befestigungsgrund 7 dargestellte Bohrloch 8, wird die in Fig. 6 in einer Seitenansicht dargestellte Siebhülse 20 zum Abdecken des Befestigungsabschnittes und des Konusabschnittes 12 axial auf die Ankerstange 10 aufgeschoben.

Ein in Fig. 8 erkennbarer Mitnehmersteg 21 erstreckt sich entlang dem Innenmantel der Siebhülse 20 und besteht beispielsweise aus einem ausreichend stabilen Draht, der mit der Siebhülse 20 fest verbunden ist. Der Mitnehmersteg 21 ruht im aufgeschobenen Zustand der Siebhülse 20 in der Nut 17 und gestattet eine drehfeste Verbindung der Siebhülse 20 mit der Ankerstange 10. Die Nut 17 bildet dabei für den Mitnehmersteg 21 ein Widerlager. Der Mitnehmersteg 21 kann in der in Fig. 8 veranschaulichten Weise aus einem zusätzlichen Teil oder auch aus einer ausreichend stabilen radial nach innen weisenden Verformung der Siebhülse 20 bestehen.

Die Siebhülse 20 wird somit mit Hilfe des Mitnehmerstegs 21 und der Nut 17 in Umfangsrichtung festgelegt, jedoch ist sie in axialer Richtung bis zum Anschlag am Gewindeabschnitt 18 frei beweglich.

Bei der in Fig. 5 dargestellten Ankerstange 10 hat die zur Abdeckung und Reinigung drehfest angeordnete Siebhülse 20 zusätzlich zu den oben erwähnten Funktionen zwei weitere Funktionen. Die erste dieser Funktionen besteht in einer Schutzfunktion, da die Drähte 5, 6 des Maschendrahtes der Siebhülse 20 einen Schutzmantel für die Oberfläche der Konen 13 der Ankerstange 10 bilden. Die Konusflächen der Konen 13 sind bei der in Fig. 5 dargestellten Ankerstange 10 als nicht haftende reibungsarme Umfangsflächen ausgebildet, die durch die Siebhülse 20 bei der Montage vor einer Beschädigung geschützt werden.

Die zweite zusätzliche Funktion der Siebhülse 20 zeigt sich, wenn die Ankerstange 10 in der in Fig. 7 veranschaulichten Weise mit Mörtelmasse 9 in einem Befestigungsgrund 7 verankert wird, in dem sich nach dem Aushärten der Mörtelmasse 9 ein in Fig. 8 dargestellter Riß 22 bildet. Durch die axialen Drähte 5 der Siebhülse 20 werden in der ausgehärteten Mörtelmasse 9 Trennstege gebildet, die dazu führen, daß die ausgehärtete Mörtelschale mit einer verhältnismäßig kleinen Kraft aufgeweitet werden kann und auf diese Weise bei einer axialen Relativbewegung der Konen 13 ein gutes Nachspreizen der ausgehärteten Mörtelschale gestattet. Dabei kommt es in dem durch den Riß 22 gebildeten Spalt zu einer Verformung der Drähte 6 der durch die Drähte 5, 6 gebildeten Maschen, indem die wellenförmige Gestalt der Drähte 6 im Bereich des Risses 22 beim Aufweiten der ausgehärteten Mörtelschale geringfügig gestreckt wird.

Bei der Verwendung von nicht vorgemischten Mörtelmassen 9, wie zum Beispiel Verbundankerpatronen, Zweikomponentenmörteln oder Mörtelmassen mit verkapseltem Härter, wirkt der Drahtmantel der Siebhülsen 4 und 20 als besonders wirksames Mischelement. Außerdem erfolgt durch den Drahtmantel mit den Drähten 5, 6 eine gute Zerstörung der einzelnen Kapseln der eine oder mehrere Komponenten in Kapseln enthaltenden Mörtelmasse 9 sowie eine besonders gute Aktivierung derartiger Mörtelmassen 9.

Eine für die chemischen Reaktionen erforderliche Durchmischung wird bei allen bekannten Mörtelsystemen wie Polyestermörtel, Vinylestermörtel, Epoxidharzmörtel und auch hydraulischen Mörteln, gleichgültig, ob die Massen als Glaspatrone oder als Kartuschenmörtel ins Bohrloch 8 eingebracht werden, erreicht.

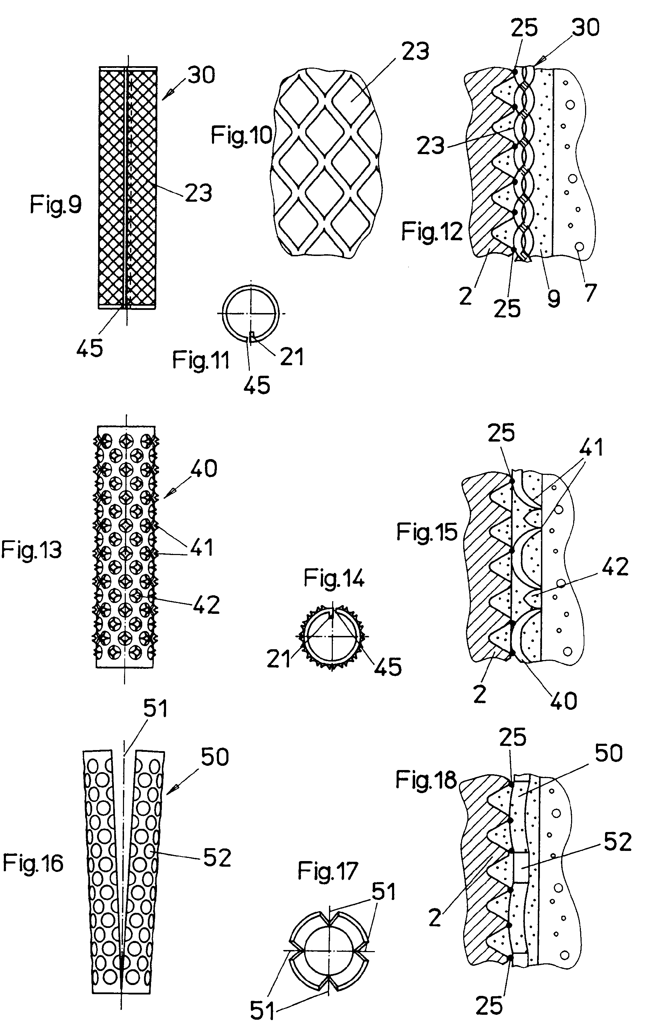

Statt der oben beschriebenen Siebhülsen 4, 20 aus Maschendraht ist es auch möglich, eine Gewindestange 1 oder eine Ankerstange 10 mit einer Siebhülse 30 aus einem Rippenstreckmetall zu verwenden. Fig. 9 zeigt eine derartige Siebhülse 30 in einer Seitenansicht. Fig. 10 zeigt die Struktur des Rippenstreckmetalls in einer vergrößerten Ansicht mit in etwa quadratischen Öffnungen 23.

Der durch eine Abknickung gebildete Mitnehmersteg 21 der Siebhülse 30 ist in Fig. 11 veranschaulicht, die einen Querschnitt durch die Siebhülse 30 zeigt. Der Mitnehmersteg 21 dient zur drehfesten Verbindung der Siebhülse 30 mit der Gewindestange 1 oder der Ankerstange 10.

Fig. 12 veranschaulicht zusätzlich oder alternativ vorgesehene Schweißpunkte 25 zur Befestigung des Rippenstreckmetalls der Siebhülse 30 an den Gewindespitzen des Gewindes 2 der Gewindestange 1.

Die Fig. 13, 14 und 15 dienen zur Veranschaulichung der Ausbildung einer Siebhülse aus durchgestanztem Lochblech. In Fig. 13 erkennt man eine Vielzahl von entlang dem Mantel der Siebhülse 40 heraustretenden Blechspitzen 41, die wie ein Reibblech wirken und Öffnungen 42 umgeben. Fig. 14 veranschaulicht einen Mitnehmersteg 21, der durch ein Abkanten des Blechs der Siebhülse 40 gebildet ist, die wie die Siebhülse 30 einen sich axial erstreckenden Spalt 45 aufweist.

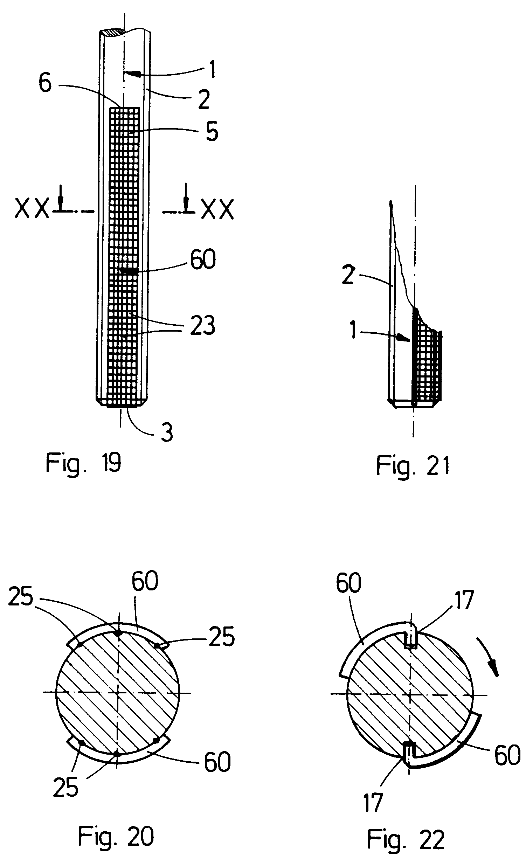

Die in den Fig. 16, 17 und 18 dargestellte Siebhülse 50 aus Lochblech ist trotz ihrer verhältnismäßig glatten Oberfläche ebenfalls als Reinigungshülse sehr wirksam. Vier Schlitze 51, die sich in axialer Richtung von einem Stirnende der Siebhülse 50 bis in die Nähe des gegenüberliegenden Stirnendes erstrecken, gestatten eine Durchmesseranpassung der Siebhülse 50 an konische Ankerstangen. Fig. 17 zeigt eine radiale Draufsicht auf die Siebhülse 50 vom aufgeweiteten Stirnende her und Fig. 18 zeigt, wie die Siebhülse 50 mit ihren glatt berandeten Löchern 52 im Bereich der Stege zwischen den Löchern 52 mit den Spitzen des Gewindes 2 durch Schweißpunkte 25 verbunden ist.

Statt der oben beschriebenen Hülsen ist es auch möglich, zusammen mit einer Ankerstange 10 oder vor allem mit einer Gewindestange 1 statt einer durchlöcherten Hülse einen durchlöcherten Metallstreifen zu verwenden. Fig. 19 zeigt eine Gewindestange 1 entlang deren Verankerungsteil sich ein Maschendrahtstreifen 60 erstreckt. Der Maschendrahtstreifen 60 ist in seiner Form der Mantelform der Gewindestange 1 angepaßt, was in Fig. 20 verdeutlicht ist. Infolge der Krümmung des Mantels der Gewindestange 1 hat der Maschendrahtstreifen 60 zur Abdeckung des Mantels des Verankerungsteils der Gewindestange 1 eine rinnenförmige Gestalt.

Wie man der Fig. 20 entnehmen kann, erstreckt sich der Maschendrahtstreifen 60 in Umfangsrichtung über etwa 90 Grad und nicht über 360 Grad, wie dies bei einer geschlossenen Siebhülse der Fall ist.

Der Maschendrahtstreifen 60 erstreckt sich bis zum vorderen Ende 3 der Gewindestange 1, über das er umgelegt ist, so daß der Maschendrahtstreifen 60 in der aus Fig. 20 ersichtlichen Weise zwei radial gegenüberliegende Bereiche des Mantels der Gewindestange 1 abdeckt. Je breiter die in Fig. 20 gezeigten Streifen 60 sind, um so mehr nähert sich die Abdeckung der Gestalt einer geschlossenen Siebhülse.

Der Maschendrahtstreifen 60 besteht aus sich in axialer Richtung erstreckenden Drähten 5 und sich in Umfangsrichtung erstreckenden Drähten 6. Schweißpunkte 25 sorgen für eine sichere drehfeste Befestigung des Maschendrahtstreifens 60 auf den Gewindespitzen der Gewindestange 1.

Statt den Maschendrahtstreifen 60 einstückig auszubilden und in der in den Fig. 19 und 20 gezeigten Weise mit der Gewindestange 1 zu verschweißen, ist es auch möglich, zwei Maschendrahtstreifen 60 zu verwenden und in der Gewindestange 1 in der in den Fig. 21 und 22 erkennbaren Weise Längsnuten 17 vorzusehen, die diametral gegenüberliegend im Mantel der Gewindestange 1 vorgesehen sind. Die Nuten 17 dienen zur Aufnahme des jeweils in Drehrichtung weisenden abgeknickten Randes der Maschendrahtstreifen 60. Durch die Wahl der Spaltbreite der Nut wird erreicht, daß der Maschendrahtstreifen 60 in die Nuten 17 eingesteckt und dort zur drehfesten Befestigung eingeklemmt werden kann.

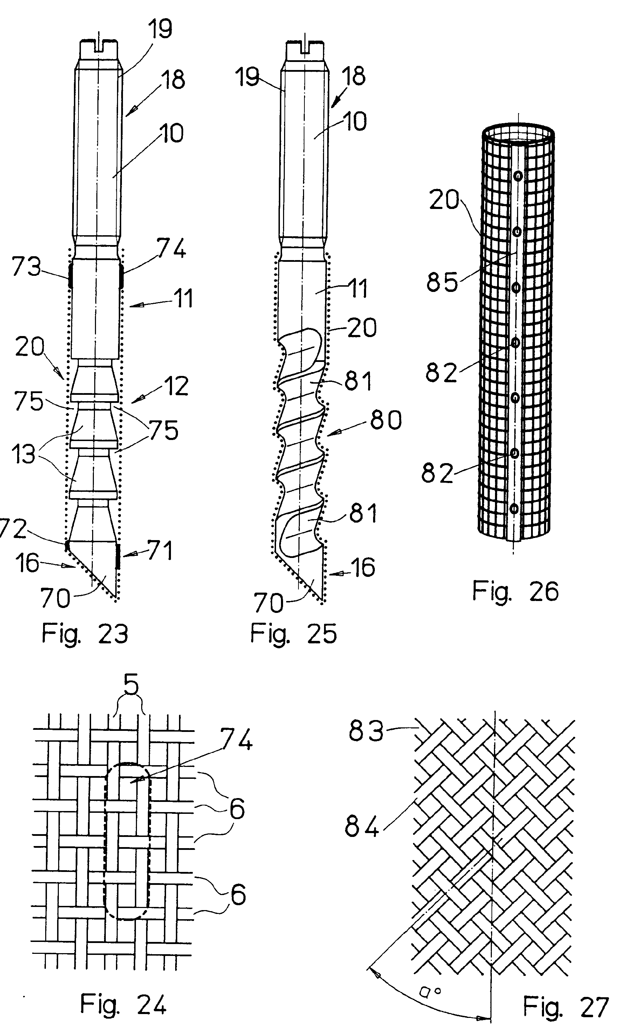

Ein bevorzugtes Ausführungsbeispiel für einen Verbundanker zeigt Fig. 23. Der dort dargestellte Verbundanker verfügt über eine Ankerstange 10 mit einem ein Gewinde 19 aufweisenden Gewindeabschnitt 18, einem glatten Befestigungsabschnitt 11 und einem Konusabschnitt 12. Der Konusabschnitt 12 verfügt über mehrere Konen 13, jedoch unterscheidet er sich von dem Konusabschnitt 12 des in Fig. 5 dargestellten Ausführungsbeispiels dadurch, daß auf eine Nut 17 verzichtet worden ist und daß am vorderen Ende 16 eine Dachschneide 70 vorgesehen ist.

Ähnlich wie bei dem anhand der Figuren 5 bis 8 beschriebenen Ausführungsbeispiel verfügt der in Fig. 23 dargestellte Verbundanker über eine Siebhülse 20, die sich entlang der Mantelfläche der Ankerstange 10 erstreckt und mit dieser an vier Schweißstellen 71 bis 74 verbunden ist.

Die Schweißstellen 71 bis 74 sind stabil genug, um eine drehfeste Verbindung zwischen der Siebhülse 20 und der Ankerstange 10 zu gewährleisten. Dabei wirkt der Formschluß unterstützend, der im Bereich des vorderen Endes 16 durch eine von einer Rotationssymmetrie abweichende Form erhalten wird. Wie man in Fig. 23 erkennt, geht der letzte Konus 13 der Ankerstange 10 mit einer verlängerten Überzugszone in die Dachschneide 70 über, die einen Winkel von 30 bis 60 Grad aufweisen kann. Da die Siebhülse 20 in der in Fig. 23 erkennbaren Weise einerseits der Mantelfläche und andererseits der Schräge der Dachschneide angepaßt ist, ergibt sich am vorderen Ende 16 der Ankerstange 10 ein Formschluß, durch den ein Teil der Torsionskräfte aufgefangen wird, die beim Eindrehen der Ankerstange 10 mit der auf ihrer Mantelfläche befestigten Siebhülse 20 auftreten. In Fig. 23 erkennt man außerdem eine Vielzahl von Ringräumen 75, die zwischen den konischen Oberflächen der Spreizkonen 13 und der zylindrischen Innenseite der Siebhülse 20 gebildet werden. Diese Ringräume 75 gestatten die Aufnahme von an der Bohrlochwandung abgestreiftem Material sowie von Mörtelmasse.

In einer mit der Fig. 8 vergleichbaren Weise gestattet der in Fig. 23 dargestellte Verbundanker ein Nachspreizen einer ausgehärteten Mörtelmasse beim Auftreten eines Risses, da die Schweißstellen 71 bis 74 als Sollbruchstellen ausgebildet sind, die einerseits zwar stark genug sind, um die beim Einsetzen in Umfangsrichtung auftretenden Drehkräfte aufzufangen, aber die andererseits ausreichend schwach sind, um beim Auftreten einer Zugkraft die Ankerstange 10 freizugeben.

In Fig. 24 ist stellvertretend die Schweißstelle 74 vergrößert dargestellt. Die Schweißstelle 74 verbindet zwei axiale Drähte 5 sowie fünf umlaufende Drähte 6 mit dem glatten Befestigungsabschnitt 11. Infolge der von der quadratischen Form abweichenden Gestalt der Schweißstelle 74 hat diese in Umfangsrichtung eine größere Belastbarkeit als in axialer Richtung. Bei einer Belastung in axialer Richtung nämlich erfolgt eine Kraftübertragung durch lediglich zwei axiale Drähte 5, die jedoch im Falle einer Rißbildung in der ausgehärteten Mörtelschale durch die auf die Ankerstange 10 wirkenden Zugkräfte verhältnismäßig leicht reißen können. Entsprechend reißen die axialen Drähte 5 der Schweißstellen 71 bis 73, um ein Nachspreizen der ausgehärteten Mörtelschale zu gestatten.

Infolge der unsymmetrischen Gestalt am vorderen Ende 16 der Ankerstange 10 mit der an die Form der Dachschneide 70 angepaßten Form der Siebhülse 20 wird eine drehfeste Verbindung zwischen der Siebhülse 20 und damit der Mörtelschale einerseits und der Ankerstange 10 andererseits erreicht, die auch dann noch wirksam ist, wenn die Schweißstellen 71 bis 74 durch Reißen der axialen Drähte 5 eine axiale Bewegung zum Nachspreizen der Mörtelschale gestatten. Somit ist es nach dem Setzen im ausgehärteten Zustand des Mörtels auch möglich, ein Drehmoment auf den Gewindeabschnitt 18 aufzubringen. Es braucht nicht erwähnt zu werden, daß die axialen Drähte 5 und umlaufenden Drähte 6 an den Kreuzungspunkten lediglich durch Reibkräfte miteinander verbunden und nicht miteinander verschweißt sind.

Fig. 25 zeigt eine weitere Ausführung für eine Ankerstange 10 mit einem Gewindeabschnitt 18 und einem Gewinde 19. Der glatte Befestigungsabschnitt 11 dieser Ankerstange 10 geht in einen Spiralabschnitt 80 über, der durch eine spiralförmige Ausnehmung 81 gebildet wird. Die Siebhülse 20 umhüllt den glatten Befestigungsabschnitt 11 und den Spiralabschnitt 80 in der in Fig. 25 dargestellten Weise und gestattet aufgrund des Formschlusses eine drehfeste Verbindung. Die Drehfestigkeit wird dabei dadurch erhöht, daß am vorderen Ende 16 wie bei dem in Fig. 23 dargestellten Ausführungsbeispiel eine Dachschneide 70 vorgesehen ist, gegen die der zugeordnete Mantelbereich der Siebhülse 20 ebenfalls angeschmiegt ist.

Um eine bessere Stabilität der Siebhülse 20 gegen Verdrehung zu erreichen, kann diese in der in Fig. 26 dargestellten Weise mit einem dünnen Blechstreifen 85 versehen sein, der mit der Siebhülse punktweise an den Stellen 82 verschweißt ist.

Eine weitere Möglichkeit, die Stabilität der Siebhülse 20 zu erhöhen, besteht darin, die Drähte 83, 84 der Siebhülse 20 in der in Fig. 27 dargestellten Weise unter einem Winkel von 30 bis 60 Grad gegenüber der Hülsenlängsachse anzuordnen.

Die anhand der Fig. 23 bis 27 erörterten Merkmale gestatten die Lieferung eines kompletten Befestigungselementes, das bei der Montage ein unsachmäßiges Setzen, d.h. das Setzen der Ankerstange 10 ohne Siebhülse 20 verhindert.

## Patentansprüche

1. Verbundanker mit einem in ein mit aushärtbarer Mörtelmasse füllbares Bohrloch unter Drehung einsetzbaren Verankerungsteil, auf dessen Mantelfläche eine beim Einschieben des Verbundankers in das Bohrloch entlang der Bohrlochwandung streifende Abdeckung angeordnet ist, die eine Vielzahl von radialen Öffnungen aufweist, **dadurch gekennzeichnet**, daß die Abdeckung mit dem Verankerungsteil (2, 11, 12) drehfest verbunden ist und sich zumindest über einen Umfangsabschnitt in axialer Richtung entlang dem Verankerungsteil (2, 11, 12) erstreckt.

2. Verbundanker nach Anspruch 1, dadurch gekennzeichnet, daß die Abdeckung ein rinnenförmig ausgebildeter Maschendrahtstreifen (60) ist.

3. Verbundanker nach Anspruch 2, dadurch gekennzeichnet, daß der Maschendrahtstreifen (60) sich in axialer Richtung bis zum vorderen Ende (3) des Verankerungsteils (2, 11, 12) des Verbundankers (1, 10) erstreckt.

4. Verbundanker nach Anspruch 2, dadurch gekennzeichnet, daß der Maschendrahtstreifen (60) über das vordere Ende (3) des Verankerungsteils (2, 11, 12) umgelegt ist und sich entlang radial gegenüberliegender Mantelbereiche erstreckt.

5. Verbundanker nach einem der Ansprüche 1 bis 4, dadurch gekennzeichnet, daß die Abdeckung mit dem Mantel des Verankerungsteils (2, 11, 12) an einer Vielzahl von Punkten (25) verschweißt ist.

6. Verbundanker nach einem der Ansprüche 1 bis 5, dadurch gekennzeichnet, daß die Abdeckung (60) wenigstens an der in Eindrehrichtung weisenden Kante eine radiale Abknickung aufweist, die in eine sich axial im Mantel des Verankerungsbereichs erstreckende Nut (17) eingeklemmt oder eingesteckt ist.

7. Verbundanker nach einem der vorstehenden Ansprüche, bei dem die Abdeckung eine das Verankerungsteil des Verbundankers ganz umgebende Hülse ist, dadurch gekennzeichnet, daß die Hülse (4, 30, 40, 50) mit den Gewindespitzen (2) einer Gewindestange (1) durch Schweißpunkte (25) verbunden ist.

8. Verbundanker nach dem Oberbegriff des Anspruchs 7, dadurch gekennzeichnet, daß die Hülse (20, 30, 40) einen Mitnehmersteg (21) aufweist, der in die auf dem Verbundanker (10) ausgebildete sich axial erstreckende radiale Nut (17) eingreift.

9. Verbundanker nach einem der Ansprüche 7 oder 8, dadurch gekennzeichnet, daß die Hülse (4, 20) als Maschendrahthülse mit axialen Drähten (5) und in Umfangsrichtung umlaufenden Drähten (6) ausgebildet ist.

10. Verbundanker nach einem der Ansprüche 1 bis 8, dadurch gekennzeichnet, daß die Abdeckung (30) aus einem Rippenstreckmetallblech hergestellt ist.

11. Verbundanker nach einem der Ansprüche 1 bis 8, dadurch gekennzeichnet, daß die Abdeckung (50) aus einem Lochblech besteht.

12. Verbundanker nach Anspruch 1, dadurch gekennzeichnet, daß das Lochblech mit Öffnungen (42) mit Blechspitzen (41) in der Gestalt eines Reibbleches ausgebildet ist.

13. Verbundanker nach einem der vorstehenden Ansprüche, dadurch gekennzeichnet, daß das Verankerungsteil eine einen oder mehrere Spreizkonen (13) aufweisende Ankerstange (10) ist.

14. Verbundanker nach Anspruch 1 oder 13, dadurch gekennzeichnet, daß das vordere Ende (16) der Ankerstange (10) als Dachschneide (70) ausgebildet ist.

15. Verbundanker nach Anspruch 13 oder 14, dadurch gekennzeichnet, daß die Abdeckung (20) an ihrem vorderen und hinteren Ende über Sollbruchstellen (71 bis 74) mit der Ankerstange (10) verbunden ist, die bei einer Zugbelastung der Ankerstange (10) brechen.

16. Verbundanker nach Anspruch 15, dadurch gekennzeichnet, daß die Abdeckung eine Maschendrahthülse (20) ist, die an den in axialer Richtung geschwächten Sollbruchstellen (71 bis 74) jeweils mit der Ankerstange (10) verschweißt ist, indem die Verschweißung nur wenige axiale Drähte (5), aber mehrere umlaufende Drähte (6) umfaßt.

17. Verbundanker nach Anspruch 16, dadurch gekennzeichnet, daß am vorderen Ende und hinteren Ende der Maschendrahthülse (20) an diametral gegenüberliegenden Stellen (71, 72; 73, 74) jeweils zwei axiale Drähte (5) und fünf umlaufende Drähte (6) mit der Ankerstange (10) verschweißt sind.

18. Verbundanker nach Anspruch 1, dadurch gekennzeichnet, daß die Ankerstange (10) ein als Spirale (80) ausgebildetes Verankerungsteil sowie an ihrem vorderen Ende (16) eine Dachschneide (70) aufweist, die von einer durch Formschluß drehfest gehaltenen Maschendrahthülse (20) umgeben sind.

19. Verbundanker nach Anspruch 1, dadurch gekennzeichnet, daß die Abdeckung eine Maschendrahthülse (20) ist, die durch einen sich in axialer Richtung erstreckenden dünnen Blechstreifen (85) stabilisiert ist, der mit der Maschendrahthülse (20) punktweise (82) verschweißt ist.

20. Verbundanker nach Anspruch 1 oder 19, dadurch gekennzeichnet, daß die Abdeckung eine Maschendrahthülse (20) ist, deren im wesentlichen rechtwinklig zueinander verlaufende Drähte (83, 84) gegenüber der Hülsenlängsachse in einem Winkel zwischen 30 Grad und 60 Grad angeordnet sind.

21. Verbundanker nach einem der vorstehenden Ansprüche, dadurch gekennzeichnet, daß die Abdeckung Öffnungen (23, 42, 52) zur Abführung von von der Bohrlochwandung abgestreiftem Material in Ringräume (2, 14, 75) des Verankerungsteils (1, 11, 12) aufweist.

## Claims

1. A compound anchor comprising an anchoring member which can be introduced with a rotary movement into a borehole which can be filled with hardenable mortar material, on the peripheral surface of which anchoring member is arranged a cover means which scrapes along the wall of the borehole when the compound anchor is pushed into the borehole and which has a plurality of radial openings, characterised in that the cover means is non-rotatably connected to the anchoring member (2, 11, 12) and extends at least over a peripheral portion in the axial direction along the anchoring member (2, 11, 12).

2. A compound anchor according to claim 1 characterised in that the cover means is a wire mesh strip (60) of a channel-like configuration.

3. A compound anchor according to claim 2 characterised in that the wire mesh strip (60) extends in the axial direction as far as the front end (3) of the anchoring member (2, 11, 12) of the compound anchor (1, 10).

4. A compound anchor according to claim 2 characterised in that the wire mesh strip (60) is laid over the front end (3) of the anchoring member (2, 11, 12) and extends along radially oppositely disposed regions of the peripheral surface.

5. A compound anchor according to one of claims 1 to 4 characterised in that the cover means is welded to the peripheral surface of the anchoring member (2, 11, 12) at a plurality of points (25).

6. A compound anchor according to one of claims 1 to 5 characterised in that at least at the edge which faces in the direction of rotary insertion movement the cover means (60) has a radially bent portion which is clamped or inserted into a groove (17) extending axially in the peripheral surface of the anchoring region.

7. A compound anchor according to one of the preceding claims wherein the cover means is a sleeve which entirely encloses the anchoring member of the compound anchor characterised in that the sleeve (4, 30, 40, 50) is connected to the screwthread crests (2) of a screwthreaded rod (1) by spot welds (25).

8. A compound anchor as set forth in the classifying portion of claim 7 characterised in that the sleeve (20, 30, 40) has an entrainment lug (21) engaging into the axially extending radial groove (17) provided on the compound anchor (10).

9. A compound anchor according to one of claims 7 and 8 characterised in that the sleeve (4, 20) is in the form of a wire mesh sleeve with axial wires (5) and wires (6) extending in the peripheral direction around the sleeve.

10. A compound anchor according to one of claims 1 to 8 characterised in that the cover means (30) is made from an expanded rib-bearing metal sheet.

11. A compound anchor according to one of claims 1 to 8 characterised in that the cover means (50) comprises an apertured metal sheet.

12. A compound anchor according to claim 11 characterised in that the apertured sheet is provided with openings (42) with sheet metal points (41) in the configuration of a grater plate.

13. A compound anchor according to one of the preceding claims characterised in that the anchoring member is an anchor rod (10) having one or more spreader cones (13).

14. A compound anchor according to claim 1 or claim 13 characterised in that the front end (16) of the anchor rod (10) is in the form of a roof-like cutting edge (70).

15. A compound anchor according to claim 13 or claim 14 characterised in that the cover means (20) is connected at its front and rear ends to the anchor rod (10) by way of desired-fracture locations (71 to 74) which fracture when the anchor rod (10) is subjected to a tensile loading.

16. A compound anchor according to claim 15 characterised in that the cover means is a wire mesh sleeve (20) which at each of the desired-fracture locations (71 to 74) which are weakened in the axial direction is welded to the anchor rod (10) by the welding involving only a few axial wires (5) but a plurality of peripherally extending wires (6).

17. A compound anchor according to claim 16 characterised in that two axial wires (5) and the five peripherally extending wires (6) are respectively welded to the anchor rod (10) at the front end and the rear end of the wire mesh sleeve (20) at diametrally oppositely disposed locations (71, 72; 73, 74).

18. A compound anchor according to claim 1 characterised in that the anchor rod (10) has an anchoring member which is in the form of a spiral (80) and at its front end (16) a roof-shaped cutting edge (70) which is surrounded by a wire mesh sleeve (20) non-rotatably held by positively locking engagement.

19. A compound anchor according to claim 1 characterised in that the cover means is a wire mesh sleeve (20) stabilised by a thin sheet metal strip (85) which extends in the axial direction and which is welded spot-wise (82) to the wire mesh sleeve (20).

20. A compound anchor according to claim 1 or claim 19 characterised in that the cover means is a wire mesh sleeve (20) whose wires (83, 84) which extend substantially at a right angle to each other are arranged at an angle of between 30° and 60° relative to the longitudinal axis of the sleeve.

21. A compound anchor according to one of the preceding claims characterised in that the cover means has openings (23, 42, 52) for the removal of material which has been scraped off the wall of the borehole intoannular spaces (2, 14, 75) of the anchoring member (1, 11, 12).

## Revendications

1. Dispositif d'ancrage composite comportant une pièce d'ancrage mise en place par rotation dans un trou de forage apte à être rempli de mortier durcissable, pièce dont la surface de l'enveloppe est pourvue d'un revêtement à comportement râpeux lors de l'enfoncement du dispositif d'ancrage composite le long des parois du trou de forage, et qui présente une pluralité d'ouvertures radiales, caractérisé en ce que le revêtement est bloqué en rotation sur la pièce d'ancrage (2, 11, 12) et s'étend axialement au moins sur une partie de la périphérie de la pièce d'ancrage (2, 11, 12).

2. Dispositif selon la revendication 1, caractérisé en ce que le revêtement est une bande en treillis métallique (60) conformée en gouttière.

3. Dispositif selon la revendication 2, caractérisé en ce que la bande en treillis métallique (60) s'étend axialement jusqu'à l'extrémité avant (3) de la pièce d'ancrage (2, 11, 12) du dispositif d'ancrage composite.

4. Dispositif selon la revendication 2, caractérisé en ce que la bande de treillis métallique (60) entoure la pièce d'ancrage (2, 11, 12) et s'étend le long de son enveloppe en lui faisant face radialement.

5. Dispositif selon l'une des revendications 1 à 4, caractérisé en ce que le revêtement est soudé à l'enveloppe de la pièce d'ancrage en une pluralité de points (25).

6. Dispositif selon l'une des revendications 1 à 5, caractérisé en ce que le revêtement (60) présente, au moins sur l'arête dirigée dans le sens de rotation, une pliure qui est collée ou accrochée axialement dans une rainure (17) de l'enveloppe de la zone d'ancrage.

7. Dispositif selon l'une des revendications précédentes dans lesquelles le revêtement forme une douille entourant complètement la pièce d'ancrage du dispositif d'ancrage composite, caractérisé en ce que la douille (4, 30, 40, 50) est reliée à la pointe (2) d'une tige filetée (1) au moyen de points de soudure.

8. Dispositif selon la revendication précédente, caractérisé en ce que la douille (20, 30, 40) présente une barrette de maintien (21), qui s'accroche axialement dans la rainure (17) à direction radiale, formée dans le dispositif d'ancrage composite (10).

9. Dispositif selon l'une des revendications 7 à 8, caractérisé en ce que la douille (4, 20) est formée d'une douille en treillis métallique comportant des fils (5) de direction axiale et des fils (6) formant l'entourage.

10. Dispositif selon l'une des revendications 1 à 8, caractérisé en ce que le revêtement (30) est formé d'une tôle métallique ondulée.

11. Dispositif selon l'une des revendications 1 à 8, caractérisé en ce que le revêtement (50) est formé d'une tôle perforée.

12. Dispositif selon la revendication 1, caractérisé en ce que la tôle perforée comporte des ouvertures (42) avec des pointes (41) formant une tôle râpante.

13. Dispositif selon l'une des revendications précédentes, caractérisé en ce que la pièce d'ancrage est une tige d'ancrage avec un ou plusieurs cônes d'écartement.

14. Dispositif selon l'une des revendications 1 ou 13, caractérisé en ce que l'extrémité avant (16) de la tige d'ancrage (10) est en pan coupé.

15. Dispositif selon l'une des revendications 13 ou 14, caractérisé en ce que le revêtement (20) est relié à la tige d'ancrage, par ses extrémités avant et arrière au moyen de points (71 à 74) d'affaiblissement pouvant se rompre sous l'effet d'une contrainte de la tige d'ancrage (10).

16. Dispositif selon la revendication 15, caractérisé en ce que le revêtement est une douille en treillis métallique, qui est soudée axialement à chaque point d'affaiblissement (71 à 74) sur la tige d'ancrage (10), la soudure entourant uniquement quelque fils axiaux (5) et plusieurs fils (6) d'entourage.

17. Dispositif selon la revendication 16, caractérisé en ce que chaque groupe de deux fils axiaux (5) et cinq fils d'entourage (6) sont soudés à la tige d'ancrage aux extrémités avant et arrière de la douille en treillis (20) en des endroits (71, 72 ; 73, 74) se faisant face diamétralement.

18. Dispositif selon la revendication 1, caractérisé en ce que la tige d'ancrage (10) présente une pièce d'ancrage en forme de spirale (80) et une extrémité avant (16) en forme de pan coupé (70), qui sont entourées par une douille en treillis métallique bloquée en rotation par un moyen de fermeture.

19. Dispositif selon la revendication 1, caractérisé en ce que le revêtement est une douille en treillis métallique (20) qui est immobilisée au moyen d'une bande de tôle fine s'étendant axialement, et soudée par points (82) sur la douille (20).

20. Dispositif selon l'une des revendications 1 ou 19, caractérisé en ce que le revêtement est une douille en treillis métalliques (20), dont les fils (83, 84) sont disposés perpendiculairement les uns par rapport aux autres et inclinés d'un angle compris entre 30 et 60° par rapport à l'axe de la douille.

21. Dispositif selon l'une des revendications précédentes, caractérisé en ce que les ouvertures (23, 42, 52) du revêtement présentent des espaces annulaires (2, 14, 75) dans la pièce d'ancrage (1, 11, 12) pour la sortie du matériau arraché.
